# EUROPÄISCHE PATENTANMELDUNG

(11) **EP 1 431 105 A2**
(43) Veröffentlichungstag der Anmeldung: **23.06.2004**
(21) Anmeldenummer: 03027590.3
(22) Anmeldetag: 02.12.2003
(51) Int. Cl.: B60N 2/235

(54) **Verriegelungsvorrichtung für einen Fahrzeugsitz**

(30) Priorität: 21.12.2002 DE 10260581
(71) Anmelder: KEIPER GmbH & Co. KG, 67657 Kaiserslautern (DE)
(72) Erfinder: Armbrust, Karl-Peter, 67715 Geiselberg (DE); Geib, Alexandra, 67685 Schwedelbach (DE)
(74) Vertreter: Patentanwälte Hosenthien-Held und Dr. Held

(57) **Zusammenfassung**

Bei einer Verriegelungsvorrichtung (11) für einen Fahrzeugsitz, insbesondere für einen Kraftfahrzeugsitz, mit einer schwenkbar gelagerten Sperrklinke (13), welche einen ersten Lagerbolzen (19) umschließt, einem relativ zum ersten Lagerbolzen beweglichen Gegenelement (20), mit welchem die Sperrklinke (13) zum Verriegeln der Verriegelungsvorrichtung (11) zusammenwirkt, und einem beweglich gelagerten Fangelement (21) zur Abstützung der Sperrklinke (13) im Crashfall, ist die Sperrklinke (13) um einen Schwenkbolzen (15) schwenkbar, welcher am Rand oder im Randbereich der Sperrklinke (13) vorgesehen ist.

## Beschreibung

Die Erfindung betrifft eine Verriegelungsvorrichtung für einen Fahrzeugsitz mit den Merkmalen des Oberbegriffs des Anspruches 1.

Aus der DE 100 18 125 A1 ist ein Beschlag mit einer Verriegelungsvorrichtung dieser Art bekannt, bei der eine schwenkbare Sperrklinke das mit einem Zahnkranz versehene Beschlagoberteil als Gegenelement verriegelt. Kopfkreis und Fußkreis des Zahnkranzes sind konzentrisch um den Schwenkbolzen des Beschlagoberteils gekrümmt. Der Spannexzenter wirkt indirekt über einen Steuernocken auf die Sperrklinke ein. Die Sperrklinke und das Fangelement einerseits und der Steuernocken und der Spannexzenter andererseits können dadurch unterschiedlich stark ausgebildet werden, um besser Belastungen aufnehmen zu können.

Der Erfindung liegt die Aufgabe zu Grunde, eine Verriegelungsvorrichtung der eingangs genannten Art für höhere Belastungen zu schaffen. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Dadurch, daß die Sperrklinke um einen Schwenkbolzen schwenkbar ist, welcher am Rand oder im Randbereich der Sperrklinke vorgesehen ist, wird der Drehpunkt der Sperrklinke vom ersten Lagerbolzen, welcher zur Lastaufnahme im Crashfall ausgelegt ist und daher die Sperrklinke im Crashfall lagert, weg an den Rand der Sperrklinke verlagert. Gegenüber einer auf bekannte Weise auf dem ersten Lagerbolzen schwenkbar gelagerten Sperrklinke, bei welcher die Anzahl der Zähne aufgrund der konkaven Ausbildung der Sperrklinke im Bereich der Verzahnung und aufgrund der Relativbewegung von Sperrklinke und Gegenelement beschränkt ist, kann durch die Verlagerung des Drehpunktes die Sperrklinke mit einer höheren Anzahl von Zähnen bzw. einer längeren Verzahnung versehen werden, ohne daß aufgrund der Relativbewegung Interferenzen zwischen den Verzahnungen auftreten. Dadurch kann die maximale Belastbarkeit gesteigert werden. Vorzugsweise ist die Verzahnung daher auch im Bereich zwischen dem ersten Lagerbolzen und dem Gegenelement ausgebildet. Für die Beweglichkeit der Sperrklinke weist diese zum Umschließen des ersten Lagerbolzens vorzugsweise eine Kulisse auf, welche kreisbogenförmig um den Schwenkbolzen gekrümmt ist, d.h. der Lagerbolzen ragt durch diese Kulisse der Sperrklinke.

Für die Lastaufnahme ist der Durchmesser des stark dimensionierten, ersten Lagerbolzens wesentlich größer als der Durchmesser des Schwenkbolzens, der wegen einer geringen Lastaufnahme auch nur gering dimensioniert zu sein braucht. Entsprechend stützt das schwenkbar gelagerte, vorgespannte Fangelement die Sperrklinke im Crashfall vorzugsweise nicht nur an dem vom Schwenkbolzen abgewandten Ende ab, sondern auch näherungsweise im Bereich des ersten Lagerbolzens. Der Schwenkbolzen und der erste Lagerbolzen sind vorzugsweise in festem Abstand und unbeweglich zueinander angeordnet und vorzugsweise am gleichen Bauteil, beispielsweise einem Beschlagteil, angebracht, an dem auch das Fangelement vorzugsweise gelagert ist.

Prinzipiell kann das Fangelement alleine den verriegelten Zustand sichern, beispielsweise wenn der Abstand zwischen Sperrklinke und Fangelement deutlich kleiner ist als die Zahnhöhe der Verzahnungen der Sperrklinke und des Gegenelementes oder wenn die Sperrklinke vorgespannt ist. Vorzugsweise ist aber ein schwenkbar gelagerter, vorgespannter Spannexzenter vorgesehen, welcher zum Verriegeln der Verriegelungsvorrichtung die Sperrklinke in Richtung auf das Gegenelement wenigstens indirekt beaufschlagt. Das Fangelement und der Spannexzenter können für eine kompakte Bauweise auf einem gemeinsamen, zweiten Lagerbolzen gelagert und miteinander gekoppelt sein. Das indirekte Beaufschlagen der Sperrklinke erfolgt vorzugsweise über einen Sperrnocken, der vorzugsweise auf dem ersten Lagerbolzen gelagert ist, der mit der Sperrklinke gekoppelt ist, beispielsweise über eine Schlitz-Zapfen-Führung, und den der Spannexzenter zum Verriegeln der Verriegelungsvorrichtung beaufschlagt.

Die erfindungsgemäße Verriegelungsvorrichtung kann bei Beschlägen, beispielsweise Lehneneinstellern, aber auch bei Lehnenschlössern, Bodenverriegelungen oder dergleichen, verwendet werden.

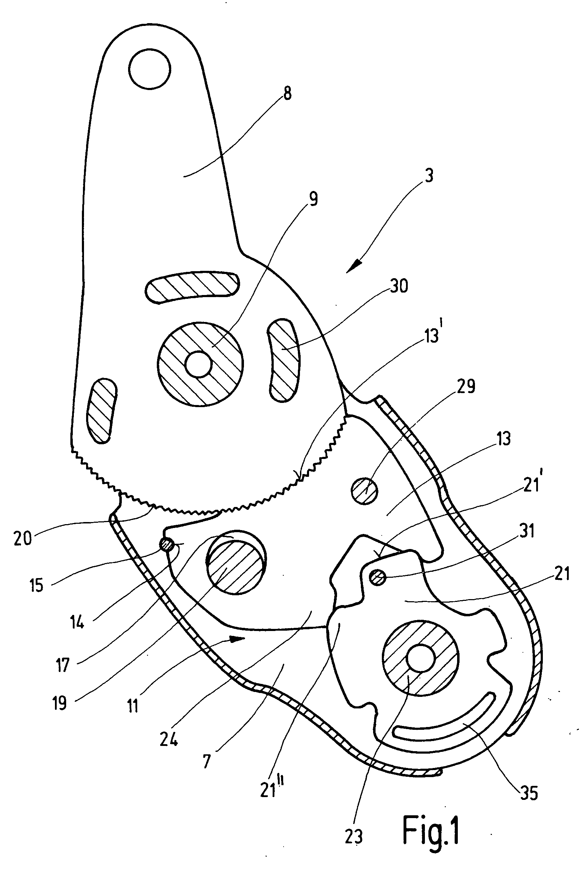

Im folgenden ist die Erfindung anhand eines in der Zeichnung dargestellten Ausführungsbeispiels samt einer Abwandlung näher erläutert. Es zeigen
- Fig. 1: einen in der Ebene der Sperrklinke vorgenommenen Längsschnitt durch einen Beschlag mit einer beispielhaften Verriegelungsvorrichtung im verriegelten Zustand,

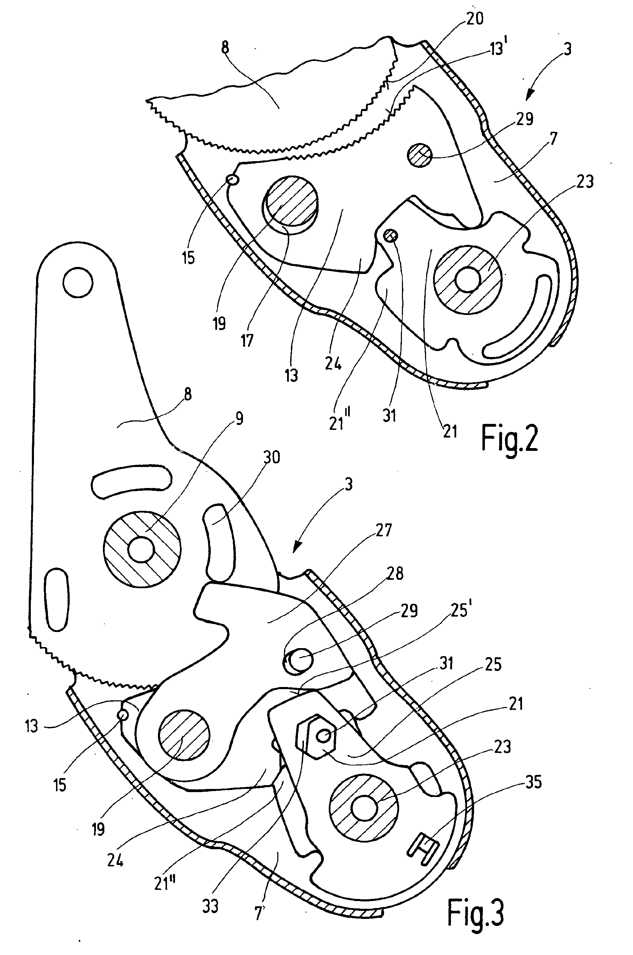

- Fig. 2: einen Fig. 1 entsprechenden Schnitt im entriegelten Zustand,
- Fig. 3: einen in der Ebene des Steuernockens vorgenommenen Längsschnitt durch den Beschlag von Fig. 1 im verriegelten Zustand,
- Fig. 4: einen Fig. 3 entsprechenden Schnitt im entriegelten Zustand,
- Fig. 5: einen Fig. 1 entsprechenden Schnitt einer Abwandlung, und
- Fig. 6: eine schematische Darstellung eines Fahrzeugsitzes.

Bei einem Fahrzeugsitz 1 einer hinteren Sitzreihe eines Kraftfahrzeuges ist eine Lehne 2 mittels jeweils eines Beschlags 3 auf den beiden Sitzseiten an einem Sitzteil 5 angebracht und relativ zu diesem verschwenkbar. Jeder Beschlag 3 weist ein sitzteilfestes Beschlagunterteil 7 und ein lehnenfestes Beschlagoberteil 8 auf, welches relativ zum Beschlagunterteil 7 um einen Lehnenbolzen 9 schwenkbar ist. Das Beschlagunterteil 7 ist als hohles, weitgehend geschlossenes Gehäuse ausgebildet, innerhalb dessen eine Verriegelungsvorrichtung 11 des Beschlags 3 angeordnet ist.

Die Verriegelungsvorrichtung 11 weist eine Sperrklinke 13 auf, welche an einem Ende am Rand mittels einer halbrunden und halboffenen Aufnahme 14 an einem kleinen Schwenkbolzen 15 abgestützt ist. Weiter im Inneren der Sperrklinke 13, aber noch in der Nachbarschaft der Aufnahme 14, weist die Sperrklinke 13 eine kreisbogenförmig um den Schwenkbolzen 15 gekrümmte Kulisse 17 auf, welche einen ersten Lagerbolzen 19 umschließt. Der am Beschlagunterteil 7 angebrachte, zum Lehnenbolzen 9 parallele erste Lagerbolzen 19 definiert die nachfolgend verwendeten Richtungsangaben. Der Schwenkbolzen 15 definiert den Drehpunkt der Sperrklinke 13, während der erste Lagerbolzen 19 für eine Lastaufnahme ausgelegt ist. Der Durchmesser des ersten Lagerbolzens 19 ist daher wesentlich größer als der Durchmesser des Schwenkbolzens 15.

Die Sperrklinke 13 trägt auf einer konkav gekrümmten Seite eine Verzahnung 13', welche im verriegelten Zustand der Verriegelungsvorrichtung 11 in einen konvex um den Lehnenbolzen 9 gekrümmten (d.h. hinsichtlich Kopfkreis und Fußkreis der Zähne) Zahnkranz 20 greift, welcher als Gegenelement zur Sperrklinke 13 am Beschlagoberteil 8 angeformt ist. Durch die Anordnung des Drehpunktes der Sperrklinke 13 am Rand kann die Verzahnung 13' über nahezu die gesamte Länge der Sperrklinke 13 ausgebildet werden, also auch in dem Bereich zwischen dem ersten Lagerbolzen 19 und dem Zahnkranz 20.

Zur Abstützung der Sperrklinke 13 im Crashfall ist ein federbelastetes Fangelement 21 vorgesehen, welches schwenkbar auf einem zum ersten Lagerbolzen 19 parallelen, beschlagunterteilfesten, zweiten Lagerbolzen 23 gelagert und in einer Ebene mit der Sperrklinke 13 angeordnet ist. Im verriegelten Zustand der Verriegelungsvorrichtung 11 befindet sich eine Fangfläche 21' des Fangelementes 21 in unmittelbarer Nähe der von der Verzahnung 13' abgewandten Seite der Sperrklinke 13, genauer gesagt in einem Abstand, der geringer als die Zahnhöhe der Verzahnung 13' ist. Von der Fangfläche 21' beabstandet, d.h. näher zum ersten Lagerbolzen 19 hin, ist am Fangelement 21 noch ein Stütznocken 21" angeformt, welcher ebenfalls in geringem Abstand zur Sperrklinke 13 angeordnet ist, und zwar in unmittelbarer Nähe einer Nase 24 der Sperrklinke 13.

Auf dem zweiten Lagerbolzen 23 ist neben dem Fangelement 21, d.h. in einer dazu parallelen Ebene, ein federbelasteter Spannexzenter 25 gelagert, welcher mit einer exzentrisch zum zweiten Lagerbolzen 23 gekrümmten Spannfläche 25' im verriegelten Zustand auf einen in der gleichen Ebene angeordneten Steuernocken 27 einwirkt.

Der Steuernocken 27 ist in axialer Richtung versetzt zur Sperrklinke 13 auf dem ersten Lagerbolzen 19 schwenkbar gelagert. Ein Langloch 28 des Steuernockens 27 umschließt einen von der Sperrklinke 13 parallel zum ersten Lagerbolzen 19 abstehenden, zylindrischen Zapfen 29. Durch das Langloch 28 und den Zapfen 29 sind die um unterschiedliche Drehpunkte erfolgenden Schwenkbewegungen der Sperrklinke 13 und des Steuernockens 27 gekoppelt. Der Steuernocken 27 kann über einen Steuerfinger mit am Beschlagoberteil 8 vorgesehenen Steuerelementen 30 zusammenwirken, um das Einfallen der Sperrklinke 13 zu steuern. Im verriegelten Zustand drückt der Spannexzenter 25 über den Steuernocken 27 und den Zapfen 29 die Sperrklinke 13 in deren Schwenkrichtung im Bereich von deren vom ersten Lagerbolzen 19 entfernt gelegenen Teil der Verzahnung 13' in den Zahnkranz 20.

Am Fangelement 21 ist ein parallel zum zweiten Lagerbolzen 23 abstehender Entriegelungsbolzen 31 angebracht, welcher auf einer Seite durch eine Kulisse des Beschlagunterteils 7 nach außen greift und auf der anderen Seite zur Kopplung von einem größeren Fenster 33 des Spannexzenters 25 umschlossen wird. Das Fangelement 21 und der Spannexzenter 25 sind durch eine dem Fenster 33 radial gegenüberliegende Schlitz-Zapfen-Führung 35 ein zweites Mal gekoppelt.

Zum Entriegeln der Verriegelungsvorrichtung 11 und damit des Beschlags 3 wird der Entriegelungsbolzen 31 durch einen außen angreifenden Seilzug oder dergleichen geschwenkt, wodurch das Fangelement 21 und - nach Anlage des Entriegelungsbolzens 31 an den Rand des Fensters 33 - auch der Spannexzenter 25 mitgenommen werden. Diese Schwenkbewegung erfolgt in der Zeichnung gegen den Uhrzeigersinn. Durch die Bewegung des Fangelementes 21 vergrößert sich der mögliche Schwenkbereich der Sperrklinke 13, während der Spannexzenter 25 den Steuernocken 27 freigibt.

Durch Anlage an die Nase 24 der Sperrklinke 13 kann das Fangelement 21 die Sperrklinke 13 aufschwenken, d.h. um den Schwenkbolzen 15 schwenken. Dabei entfernt sich das in der Zeichnung untere Ende der Kulisse 17 vom ersten Lagerbolzen 19, und das in der Zeichnung obere Ende der Kulisse 17 gelangt in Anlage an den ersten Lagerbolzen 19. Zugleich bewegt sich der Zapfen 29 von dem in der Zeichnung radial außen gelegenen Ende des Langlochs 28 zu dem in der Zeichnung radial innen gelegenen Ende des Langlochs 28. Durch ihre Bewegung entfernt die Sperrklinke 13 sich auf breiter Linie vom Zahnkranz 20. Das Beschlagoberteil 8 - und damit die Lehne 2 - kann nun in eine andere Stellung geschwenkt werden.

Zum Verriegeln der Verriegelungsvorrichtung 11 wird der Entriegelungsbolzen 31 losgelassen. Aufgrund der Federbelastungen schwenken das Fangelement 21 und der Spannexzenter 25 in ihre sichernde bzw. schließende Stellung. Der Spannexzenter 25 übt über seine am Steuernocken 27 anliegende Spannfläche 25' und weiter über den Zapfen 29 ein schließendes Moment auf die Sperrklinke 13 aus, welche eine Schwenkbewegung auf den Zahnkranz 20 zu ausführt, bis sie vollständig in Eingriff mit dem Zahnkranz 20 gelangt.

Im Crashfall kann zwar über das Beschlagoberteil 8, die Sperrklinke 13 und den Steuernocken 27 der Spannexzenter 25 in Öffnungsrichtung gedrückt werden, jedoch bewegt sich die Sperrklinke 13 nur bis zur Anlage an das Fangelement 21, d.h. an deren Fangfläche 21' und deren Stütznocken 21''.

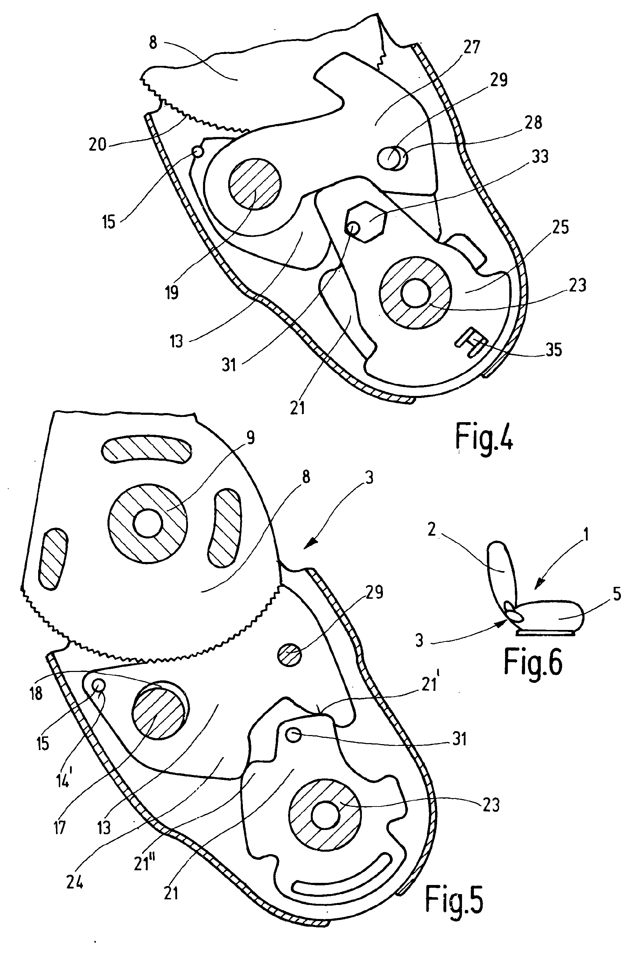

In einer Abwandlung gemäß Fig. 5 ist die Aufnahme 14' für den Schwenkbolzen 15 kreisförmig und innerhalb des Randbereichs der Sperrklinke 13 ausgebildet. Ansonsten sind die Funktionsweise und die Eigenschaften, insbesondere die lange Verzahnung 13', die gleichen wie im beschriebenen Ausführungsbeispiel.

### Bezugszeichenliste

- 1: Fahrzeugsitz
- 2: Lehne
- 3: Beschlag
- 5: Sitzteil
- 7: Beschlagunterteil
- 8: Beschlagoberteil
- 9: Lehnenbolzen
- 11: Verriegelungsvorrichtung
- 13: Sperrklinke
- 13': Verzahnung
- 14, 14': Aufnahme
- 15: Schwenkbolzen
- 17: Kulisse
- 19: erster Lagerbolzen
- 20: Zahnkranz, Gegenelement
- 21: Fangelement
- 21': Fangfläche
- 21'': Stütznocken
- 23: zweiter Lagerbolzen
- 24: Nase
- 25: Spannexzenter
- 25': Spannfläche
- 27: Steuernocken
- 28: Langloch
- 29: Zapfen
- 30: Steuerelement
- 31: Entriegelungsbolzen
- 33: Fenster
- 35: Schlitz-Zapfen-Führung

## Patentansprüche

1. Verriegelungsvorrichtung für einen Fahrzeugsitz, insbesondere für einen Kraftfahrzeugsitz, mit einer schwenkbar gelagerten Sperrklinke (13), welche einen ersten Lagerbolzen (19) umschließt, einem relativ zum ersten Lagerbolzen beweglichen Gegenelement (20), mit welchem die Sperrklinke (13) zum Verriegeln der Verriegelungsvorrichtung (11) zusammenwirkt, und einem beweglich gelagerten Fangelement (21) zur Abstützung der Sperrklinke (13) im Crashfall, **dadurch gekennzeichnet, daß** die Sperrklinke (13) um einen Schwenkbolzen (15) schwenkbar ist, welcher am Rand oder im Randbereich der Sperrklinke (13) vorgesehen ist.

2. Verriegelungsvorrichtung nach Anspruch 1, **dadurch gekennzeichnet, daß** die Sperrklinke (13) zum Umschließen des ersten Lagerbolzens (19) eine Kulisse (17) aufweist, welche kreisbogenförmig um den Schwenkbolzen (15) gekrümmt ist.

3. Verriegelungsvorrichtung nach Anspruch 1 oder 2, **dadurch gekennzeichnet, daß** der Durchmesser des ersten Lagerbolzens (19) wesentlich größer als der Durchmesser des Schwenkbolzens (15) ist.

4. Verriegelungsvorrichtung nach einem der Ansprüche 1 bis 3, **dadurch gekennzeichnet, daß** die Sperrklinke (13) eine Verzahnung (13') zum Zusammenwirken mit dem Gegenelement (20) aufweist, welche auch im Bereich zwischen dem ersten Lagerbolzen (19) und dem Gegenelement (20) ausgebildet ist.

5. Verriegelungsvorrichtung nach einem der Ansprüche 1 bis 4, **dadurch gekennzeichnet, daß** das schwenkbar gelagerte, vorgespannte Fangelement (21) die Sperrklinke (13) im Crashfall näherungsweise im Bereich des ersten Lagerbolzens (19) und an dem vom Schwenkbolzen (15) abgewandten Ende der Sperrklinke (13) abstützt.

6. Verriegelungsvorrichtung nach einem der Ansprüche 1 bis 5, **dadurch gekennzeichnet, daß** ein schwenkbar gelagerter, vorgespannter Spannexzenter (25) vorgesehen ist, welcher zum Verriegeln der Verriegelungsvorrichtung (11) die Sperrklinke (13) in Richtung auf das Gegenelement (20) wenigstens indirekt beaufschlagt.

7. Verriegelungsvorrichtung nach Anspruch 6, **dadurch gekennzeichnet, daß** das Fangelement (21) und der Spannexzenter (25) auf einem gemeinsamen, zweiten Lagerbolzen (23) gelagert und miteinander gekoppelt sind.

8. Verriegelungsvorrichtung nach Anspruch 6 oder 7, **dadurch gekennzeichnet, daß** auf dem ersten Lagerbolzen (19) noch ein Steuernocken (27) gelagert ist, welcher mit der Sperrklinke (13) gekoppelt ist und welchen der Spannexzenter (25) zum Verriegeln der Verriegelungsvorrichtung (11) beaufschlagt.

9. Verriegelungsvorrichtung nach Anspruch 8, **dadurch gekennzeichnet, daß** die Sperrklinke (13) und der Steuernocken (27) über einen Schlitz (28) und einen Zapfen (29) miteinander gekoppelt sind.

10. Beschlag (3) mit einem Beschlagunterteil (7) und einem relativ zum Beschlagunterteil (7) verschwenkbaren Beschlagoberteil (8), **gekennzeichnet durch** eine Verriegelungsvorrichtung (11) nach einem der Ansprüche 1 bis 9, wobei der erste Lagerbolzen (19) am Beschlagunterteil (7) und das Gegenelement (20) am Beschlagoberteil (8) vorgesehen ist.

11. Fahrzeugsitz, insbesondere Kraftfahrzeugsitz, mit einer Verriegelungsvorrichtung (11) nach einem der Ansprüche 1 bis 9.
